# EUROPEAN PATENT SPECIFICATION

(11) **EP 4 394 294 B1**
(45) Date of publication and mention of the grant of the patent: **03.06.2026**
(21) Application number: 23765728.3
(22) Date of filing: 13.02.2023
(51) Int. Cl.: F26B 13/02, F26B 21/00, F26B 25/06, B05D 3/04

(54) **DRYING DEVICE**
TROCKNUNGSVORRICHTUNG
DISPOSITIF DE SÉCHAGE

(30) Priority: 10.03.2022 CN 202220521551 U
(43) Date of publication of application: 03.07.2024
(73) Proprietor: Contemporary Amperex Technology (Hong Kong) Limited, Central, Central And Western District (HK)
(72) Inventor: LIU, Xuyong, Ningde, Fujian 352100 (CN); PU, Jingjing, Ningde, Fujian 352100 (CN)
(74) Representative: Gong, Jinping
(86) International application number: PCT/CN2023/075683
(87) International publication number: WO 2023/169150

(56) References cited:
- CN-A- 105 921 383
- CN-A- 107 457 163
- CN-U- 202 070 474
- CN-U- 205 701 355
- CN-U- 215 598 015
- CN-U- 217 179 162
- DE-A1- 19 951 627
- FR-A- 1 150 922
- JP-A- 2016 065 649
- US-A- 3 559 301

## Description

### Technical Field

The present application relates to the field of battery processing and manufacturing technologies, and in particular to a drying device.

### Background

In the manufacturing of lithium-ion batteries, according to process requirements, it is necessary to dry the wet coated electrode plates by means of a drying oven to obtain uniformly coated electrode plates with a specified thickness, and accordingly the drying process plays a vital role in production of electrode plates of batteries.

However, the existing drying process is prone to abnormal conditions such as cracks and dark traces that seriously affect the process yield and safety performance of products.

JP2016065649 describes a drying apparatus, a coated film forming apparatus, and a drying method.

US3559301 illustrates an air flotation system for conveying web materials.

### Summary of the Invention

In view of the above problems, the present application provides a drying device, which can prevent electrode plates from various abnormal conditions such as cracks, dark traces, bulges and uneven edges that seriously affect the process yield and safety performance of products.

The present application provides a drying device used for drying a part to be dried. The drying device includes:
a drying oven having a first surface and a second surface, the first surface and the second surface being arranged opposite to and spaced apart from each other to form a drying channel allowing the part to be dried to pass through, the first surface being provided with a first air blow port, and the first surface and/or the second surface being provided with an air exhaust port;
wherein the second surface is further provided with an air suction port;
wherein the drying device further comprises a first air volume regulation valve, the first air volume regulation valve is in communication with the first air blow port, and the first air volume regulation valve is controlled to regulate the air blow volume of the first air blow port; and
the drying device further comprises a second air volume regulation valve, the second air volume regulation valve is in communication with the air suction port, and the second air volume regulation valve is controlled to regulate the air suction volume of the air suction port.

In the drying device, since the air suction port opposite to the first air blow port is provided additionally, under the action of two airflows in the same direction, shear stress produced to an electrode plate by air blown from an upper air blow port and a lower air blow port can be weakened, and thus various abnormal conditions such as cracks, dark traces, bulges, and uneven edges are eliminated. Since the first air volume regulation valve is provided to regulate the air blow volume of the first air blow port, the air volume can be flexibly regulated, and accordingly it is feasible to regulate the part to be dried in different suspension states. Since the second air volume regulation valve is provided to regulate the air suction volume of the air suction port, the air volume can be flexibly regulated, and accordingly it is feasible to regulate the part to be dried in different suspension states.

In some embodiments, the first air blow port and the air suction port are used to apply force to the part to be dried to suspend the part to be dried within the drying channel. The part to be dried is allowed to suspend in the drying channel, so that the problems such as scratches on nozzles and breaking of the part to be dried, or even poor drying, because the part to be dried cannot be lifted.

In some embodiments, the drying oven further includes a second air nozzle disposed on the first surface and/or the second surface, the second air nozzle has a second air nozzle tip in communication with the air exhaust port, and the plane where the second air nozzle tip is located is inclined relative to an extension direction of the drying channel. In this way, the second air nozzle tip faces towards a rebound direction of hot air as much as possible, and hot air with moisture can be quickly discharged from the air exhaust port, thereby improving the air exhaust effect.

In some embodiments, the drying oven further includes a third air nozzle disposed on the second surface, the third air nozzle has a third air nozzle tip in communication with the air suction port, and the axial direction of the third air nozzle tip is parallel to the extension direction of the drying channel. Since the plane where the third air nozzle tip is located is parallel to the extension direction of the drying channel, the suction direction of the third air nozzle tip may be parallel to the extension direction of the drying channel, and then the air suction port in communication with the third air nozzle tip produces a suction force to act to the utmost extent on the part to be dried that is located in the drying channel, thus improving the capability to weaken the shear force.

In some embodiments, the drying oven further includes a second air nozzle disposed on the first surface and/or the second surface, the second air nozzle has a second air nozzle tip in communication with the air exhaust port, and the plane where the second air nozzle tip is located is inclined relative to the extension direction of the drying channel; and the drying oven further includes a third air nozzle disposed on the second surface, the third air nozzle has a third air nozzle tip in communication with the air suction port, and the plane where the third air nozzle tip is located is parallel to the extension direction of the drying channel. It not only enhances the air exhaust effect, but also improves the capability to weaken the shear force.

In some embodiments, the air suction port is arranged directly opposite the first air blow port. Since the air suction port is arranged directly opposite the first air blow port, a stress region of the part to be dried that is subjected to force from the first air blow port overlaps with a stress region of the part to be dried that is subjected to suction from the air suction port. Therefore, on the one hand, force is concentrated to weaken the shear stress, and on the other hand, damage to the part to be dried due to uneven stress can also be avoided.

In some embodiments, the first surface is provided with a plurality of first air blow ports that are spaced apart and the second surface is provided with a plurality of air suction ports that are spaced apart, along the extension direction of the drying channel. With the plurality of first air blow ports and the plurality of air suction ports, the shear force can be weakened throughout the drying process of the part to be dried, thereby improving the overall process yield and safety performance of the part to be dried.

In some embodiments, the drying device further includes a circulating fan, the circulating fan has an air inlet and an air outlet, the air inlet is in communication with the air suction port, and the air outlet is in communication with the first air blow port. Since the circulating fan is provided, the first blow port, the drying channel, the air suction port, and the circulating fan form a circulating loop, which can be conducive to internal circulation of an air field, avoids internal dissipation, and makes the drying atmosphere inside the drying channel more uniform, thus improving the drying efficiency.

In some embodiments, the first surface is provided with a plurality of first air blow ports and the second surface is provided with a plurality of air suction ports, along the extension direction of the drying channel;
all the air suction ports are in communication with the air inlet of the same circulating fan, and all the first air blow ports are in communication with the air outlet of the same circulating fan. Since all the air suction ports are in communication with the air inlet of the same circulating fan, and all the first air blow ports are in communication with the air outlet of the same circulating fan, it is possible to simplify the overall structure. Moreover, since the same circulating fan controls the air volume, it is easy to control the air volume.

In some embodiments, the first surface is provided with a plurality of first air blow ports and the second surface is provided with a plurality of air suction ports, along the extension direction of the drying channel;
a plurality of circulating fans are provided, the air inlet of each of the circulating fans is in communication with one of the air suction ports, and the air outlet of each of the circulating fans is in communication with one corresponding first air blow port. Since the air inlet of each of the circulating fans is in communication with one of the air suction ports, and the air outlet of each of the circulating fans is in communication with one corresponding first air blow port, the corresponding circulating fan can be adjusted individually, and the air volume can be controlled separately, thus making the regulation more flexible.

In some embodiments, the circulating fan is a variable-frequency fan. Since the variable-frequency fan is disposed in the circulating loop, the air volume can be regulated in real time according to drying situations, energy consumption for operation is minimized, and the overall benefit is maximized.

According to the present invention the drying device further includes a first air volume regulation valve, the first air volume regulation valve is in communication with the first air blow port, and the first air volume regulation valve is controlled to regulate the air blow volume of the first air blow port; the drying device further includes a second air volume regulation valve, the second air volume regulation valve is in communication with the air suction port, and the second air volume regulation valve is controlled to regulate the air suction volume of the air suction port. In this way, both the air blow volume of the first air blow port and the air suction volume of the air suction port can be regulated.

In some embodiments, the second surface is further provided with a second air blow port, and the second air blow port is spaced apart from the air suction port. The second air blow port can blow air into the drying channel to dry one side surface of the part to be dried. Thus, the second air blow port may cooperate with the first air blow port to dry both side surfaces of the part to be dried.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific embodiments of the present application are exemplified below.

### Description of Drawings

By reading the detailed description of the preferred implementations below, various other advantages and benefits will become apparent to those of ordinary skill in the art. The drawings are for the purpose of illustrating the preferred implementations only and are not to be considered a limitation to the present application. In addition, the like components are denoted by the like reference numerals throughout the drawings. In the drawings:
Fig. 1 is a schematic structural diagram of a drying device according to some embodiments of the present application;
Fig. 2 is a front-view schematic structural diagram of a drying device according to some embodiments of the present application;
Fig. 3 is a front-view schematic structural diagram of a drying device according to some embodiments of the present application; and
Fig. 4 is a front-view schematic structural diagram of a drying device according to some embodiments of the present application.

Reference signs in specific embodiments are as follows:
drying device 100;
drying oven 10, first surface 11, first air blow port 111, second surface 12, air exhaust port 121, air suction port 122, second air blow port 123, third air blow port 112, drying channel 13, body 14, upper covering 141, lower covering 142, first air nozzle 15, first air nozzle tip 151, second air nozzle 16, second air nozzle tip 161, third air nozzle 17, third air nozzle tip 171;
circulating fan 20, air inlet 21, air outlet 22;
first pipe 30, first section 31, second section 32;
second pipe 40, third section 41, fourth section 42;
first air volume regulation valve 50;
second air volume regulation valve 60; and
part to be dried 200.

### Detailed Description

Embodiments of the technical solutions of the present application will be described in detail below in conjunction with the drawings. The following embodiments are only used to more clearly illustrate the technical solutions of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms "including" and "having" and any variations thereof in the Specification and the Claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly or implicitly understood by persons skilled in the art that the embodiments described herein may be combined with other embodiments.

In the description of the embodiments of the present application, the term "and/or" is only an association relationship for describing associated objects, indicating that there may be three relationships, for example 1 and/or 2 may represent three situations: 1 exists alone, both 1 and 2 exist, and 2 exists alone. In addition, the character "/" herein generally represents that previous and next associated objects form an "or" relationship.

In the description of the embodiments of the present application, the term "a plurality of" refers to two or more (including two), and similarly, "multiple groups" refers to two or more (including two) groups, and "multiple sheets" refers to two or more (including two) sheets.

In the description of the embodiments of the present application, the orientation or position relationship indicated by the technical terms "center", "longitudinal", "transverse", "length", "width", "thickness", "upper," "lower," "front," "back," "left," "right," "vertical," "horizontal," "top," "bottom," "inner," "outer," "clockwise," "counterclockwise," "axial", "radial", "circumferential", etc. are based on the orientation or position relationship shown in the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In the description of the embodiments of the present application, unless otherwise expressly specified and limited, the technical terms "mount," "join," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

With the development of science and technology, more and more electronic products enter every aspect of people's lives, and the normal use of electronic products needs batteries. Lithium-ion batteries have been widely used in electronic products in various fields due to their advantages such as high energy density and environmental friendliness. With the development of electric vehicle technology, the application of lithium-ion batteries in the field of electric vehicles has attracted much attention.

At present, a lithium-ion battery is usually composed of a positive electrode, a negative electrode, a separator, an electrolyte and a shell. The positive and negative electrode plates and the separator isolated therein can be wound to obtain a cell. The negative electrode plate includes a negative electrode current collector generally made of aluminum foil, and a film containing a negative electrode active material and attached to the negative electrode current collector. The positive electrode plate includes a positive electrode current collector generally made of copper foil, and a film containing a positive electrode active material and attached to the positive electrode current collector. The separator is a microporous film made by plasticizing, extraction, and other processes. In the manufacturing of lithium-ion batteries, according to the process requirements, it is necessary to dry the wet coated electrode plates by means of a drying oven to obtain uniformly coated electrode plates with a specified thickness, and accordingly the drying process plays a vital role in production of electrode plates of batteries.

In the conventional technology, the drying oven includes an upper covering and a lower covering, the upper covering and the lower covering are arranged opposite to each other to form a drying channel, and drying hot air of the drying oven is blown out from slits of an upper blow port fixed to the upper covering and a lower blow port fixed to the lower covering, so that the hot air can play a role in drying, lifting, flattening, and the like.

However, the inventor found that, in order to ensure that an electrode plate is dry, it is necessary to increase the volume of hot air, so shear stress may be produced to the electrode plate when the hot air is blown to surfaces of the electrode plate from the upper air blow port and the lower air blow port; when the shear stress is too large, it will lead to abnormal conditions such as cracks, dark traces, bulges and uneven edges; and when the air volume is too small, the electrode plate can not be lifted, which may lead to scratches on nozzles and breaking of the electrode plate, and even lead to poor drying and other problems.

Based on the above considerations, in order to solve the abnormal conditions such as cracks, dark traces, bulges, and uneven edges that are caused by the excessive shear force on the electrode plate due to the large hot air volume during the drying process of the electrode plate, as well as the problem that the electrode plate cannot be lifted due to the small hot air volume, the inventor, after in-depth research, has designed a drying device. An air suction port arranged opposite the lower blow port is provided additionally, an air outlet direction of the lower blow port is opposite to an air suction direction of the air suction port, so that the electrode plate can be subjected to two upward forces, thereby weakening the shear stress produced to the electrode plate by air blown from the upper blow port and the lower blow port, and eliminating abnormal conditions such as cracks, dark traces, bulges, and uneven edges.

The drying device disclosed in the embodiments of the present application may, but is not limited to, be used for drying a part to be dried 200 such as an electrode plate for lithium batteries.

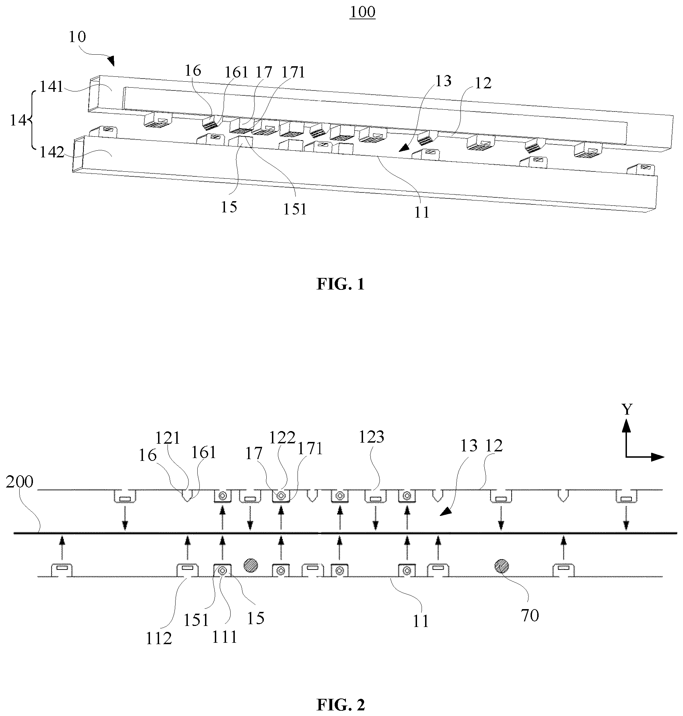

According to some embodiments of the present application, with reference to Fig. 1, and with further reference to Fig. 2, Fig. 1 is a schematic perspective diagram of a drying device according to some embodiments of the present application, and Fig. 2 is a front-view schematic structural diagram of a drying device according to some embodiments of the present application. The present application provides a drying device 100 used for drying the part to be dried 200. The drying 100 includes a drying oven 10. The drying oven 10 has a first surface 11 and a second surface 12, and the first surface 11 and the second surface 12 are arranged opposite to and spaced apart from each other to form a drying channel 13 allowing the part to be dried 200 to pass through. The first surface 11 is provided with a first air blow port 111, and the first surface 11 and/or the second surface 12 is provided with an air exhaust port 121. The second surface 12 is further provided with an air suction port 122.

As shown in Fig. 2, direction Y in the figure is a height direction of the drying oven 10, and direction X is a length direction of the drying oven 10, i.e., an extension direction of the drying channel 13 of the drying oven 10.

According to the present application, the first air blow port 111 has an effect of drying one side surface of the part to be dried 200 because it blows air into the drying channel 13.

Specifically, in an embodiment of the present application, the drying oven 10 includes a body 14 and a first air nozzle 15, a second air nozzle 16 and a third air nozzle 17 that are disposed on the body 14. The body 14 has a first surface 11 and a second surface 12. The first air nozzle 15 is disposed on the first surface 11 and has a first air nozzle tip 151, and the first air nozzle tip 151 is in communication with the first air blow port 111. The second air nozzle 16 is disposed on the first surface 11 and/or the second surface 12 and has a second air nozzle tip 161, and the second air nozzle tip 161 is in communication with the air exhaust port 121. The third air nozzle 17 is disposed on the second surface 12 and has a third air nozzle tip 171, and the third air nozzle tip 171 is in communication with the air suction port 122.

More specifically, the body 14 includes an upper covering 141 and a lower covering 142 that are arranged opposite to and spaced apart from each other, the upper covering 141 has the second surface 12 on a side toward the lower covering 142, the lower covering 142 has the first surface 11 on a side toward the upper covering 141, the first air nozzle 15 is disposed on the lower covering 142, the second air nozzle 16 is disposed on the upper covering 141 and/or the lower covering 142, and the third air nozzle 17 is disposed on the upper covering 141.

Furthermore, the upper covering 141 and the lower covering 142 have entrance and exit at both ends along the length direction of the drying oven 10 that are both in communication with the drying channel 13, and the part to be dried 200 enters the drying channel 13 from the entrance, and then is delivered from the exit after being dried in the drying channel 13.

The drying device 100 of the present application can blow hot air into the drying channel 13 via the first blow port 111, and the drying device 100 can suck air from the drying channel 13 via the air suction port 122.

It should be noted that in the conventional technology, one of the upper covering or the lower covering is further provided with an air exhaust port 121, so that when the upper blow port blows hot air to the electrode plate, the hot air rebounds with moisture to the air exhaust port 121 on the same side, which is then discharged to prevent the moisture from remaining in the drying channel. It is to be noted that, the air exhaust port 121 may also have a certain suction power, which may be provided by a rear fan, to improve the air exhaust efficiency.

However, according to the present application, the air suction port 122 opposite to the first air blow port 111 is provided additionally on the basis of the original air exhaust port 121, under the action of two airflows in the same direction, shear stress produced to the electrode plate by air blown from the upper air blow port and the lower air blow port can be weakened, and thus various abnormal conditions such as cracks, dark traces, bulges, and uneven edges are eliminated.

According to some embodiments of the present application, optionally, with continued reference to Figs. 1 and 2, the first air blow port 111 and the air suction port 122 are used to apply force to the part to be dried 200 to suspend the part to be dried 200 within the drying channel 13.

Suspension of the part to be dried 200 within the drying channel 13 refers to that the part to be dried 200 can overcome gravity under air force and be lifted by the airflows to be suspended within the drying channel 13.

The part to be dried 200 is allowed to suspend in the drying channel 13, so that the problems such as scratches on nozzles and breaking of the part to be dried 200, or even poor drying, because the part to be dried 200 cannot be lifted can be avoided.

According to some embodiments of the present application, optionally, with continued reference to Fig. 2, the drying oven 10 further includes a second air nozzle 16 disposed on the first surface 11 and/or the second surface 12, the second air nozzle 16 has a second air nozzle tip 161 in communication with the air exhaust port 121, and the plane where the second air nozzle tip 161 is located is inclined relative to the extension direction of the drying channel 13.

The plane where the second air nozzle tip 161 is located is a plane that overlaps with the second air nozzle tip 161.

When hot air is blown from the first air blow port 111 to the part to be dried 200, the hot air rebounds with moisture to the air exhaust port 121 on the same side, which is then discharged to prevent the moisture from remaining in the drying channel 13. Since the second air nozzle tip 161 of the second air nozzle 16 is in communication with the air exhaust port 121 and the plane where the second air nozzle tip 161 is located is inclined relative to the extension direction of the drying channel 13, the second air nozzle tip 161 may face towards a rebound direction of hot air as much as possible, so that the hot air with moisture can be quickly discharged from the air exhaust port 121, thus improving the air exhaust effect.

Specifically, in an embodiment of the present application, the second air nozzle 16 has two second air nozzle tips 161, the two second air nozzle tips 161 are disposed at an angle, and the plane where each of the second air nozzle tips 161 is located is inclined relative to the extension direction of the drying channel 13. In this way, the hot air is discharged through both sides, which improves the air exhaust efficiency.

According to some embodiments of the present application, optionally, with continued reference to Fig. 2, the drying oven 10 further includes a third air nozzle 17 disposed on the second surface 12, the third air nozzle 17 has a third air nozzle tip 171 in communication with the air suction port 122, and the plane where the third air nozzle tip 171 is located is parallel to the extension direction of the drying channel 13.

The plane where the third air nozzle tip 171 is located is a plane that overlaps with the third air nozzle tip 171.

Since the plane where the third air nozzle tip 171 is located is parallel to the extension direction of the drying channel, the suction direction of the third air nozzle tip 171 is parallel to the extension direction of the drying channel 13, and the air suction port 122 in communication with the third air nozzle tip 171 produces a suction force to act to the utmost extent on the part to be dried 200 that is located in the drying channel 13, thus improving the capability to weaken the shear force.

According to some embodiments of the present application, optionally, with continued reference to Fig. 2, the plane where the second air nozzle tip 161 is located is inclined relative to the extension direction of the drying channel 13, and the plane where the third air nozzle tip 171 is located is parallel to the extension direction of the drying channel 13. In this way, not only the air exhaust effect can be improved, but also the capability to weaken the shear force can be improved.

According to some embodiments of the present application, optionally, with continued reference to Fig. 2, the air suction port 122 is arranged directly opposite the first air blow port 111.

The air suction port 122 being arranged directly opposite the first air blow port 111 means that the air suction port 122 and the first air blow port 111 face each other, and the center line of the air suction port 122 and the center line of the first air blow port 111 are on the same straight line. Specifically, in an embodiment of the present application, the air suction port 122 is arranged directly opposite the first air blow port 111 along the height direction of the drying oven 10. More specifically, the first air nozzle tip 151 is arranged directly opposite the third air nozzle tip 171. Further, the plane where the first air nozzle tip 151 is located is parallel to the plane where the third air nozzle tip 171 is located. Furthermore, the plane where the first air nozzle tip 151 is located and the plane where the third air nozzle tip 171 is located are both parallel to the drying channel 13.

Since the air suction port 122 is directly opposite the first air blow port 111, a stress region of the part to be dried 200 that is subjected to force from the first air blow port 111 overlaps with a stress region of the part to be dried 200 that is subjected to suction from the air suction port 122. Therefore, on the one hand, force is concentrated to weaken the shear stress, and on the other hand, damage to the part to be dried 200 due to uneven stress can also be avoided.

According to some embodiments of the present application, optionally, with continued reference to Fig. 2, the first surface is provided with a plurality of first air blow ports 111 that are spaced apart and the second surface is provided with a plurality of air suction ports 122 that are spaced apart, along the extension direction of the drying channel 13.

Preferably, each of the first air blow ports 111 is arranged directly opposite one corresponding air suction port 122.

The plurality of first air blow ports 111 are spaced apart on the first surface, which may be arranged at an equal interval or an unequal interval. Similarly, the plurality of air suction ports 122 are spaced apart on the second surface, which may be arranged at an equal interval or an unequal interval. Compared to the way of being arranged at an unequal interval, the way of being arranged at an equal interval enables the air force applied to the part to be dried 200 to be more uniform.

With the plurality of first air blow ports 111 and the plurality of air suction ports 122, the shear force can be weakened throughout the drying process of the part to be dried 200, thereby improving the overall process yield and safety performance of the part to be dried 200.

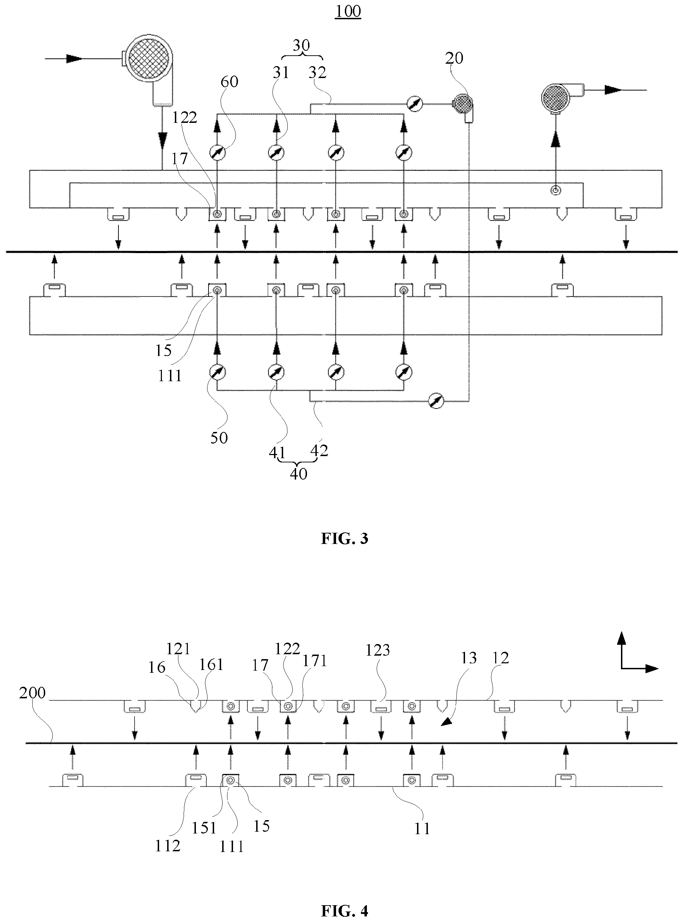

According to some embodiments of the present application, optionally, as shown in Fig. 3, the drying device 100 further includes a circulating fan 20, the circulating fan 20 has an air inlet 21 and an air outlet 22, the air inlet 21 is in communication with the air suction port 122, and the air outlet 22 is in communication with the first air blow port 111.

Specifically, the drying device 100 further includes a first pipe 30 and a second pipe 40, the air inlet 21 of the circulating fan 20 is in communication with the air suction port 122 via the first pipe 30, and the air outlet 22 is in communication with the first blow port 111 via the second pipe 40.

Since the circulating fan 20 is provided, the first blow port 111, the drying channel 13, the air suction port 122, and the circulating fan 20 form a circulating loop, which can be conducive to internal circulation of an air field, avoids internal dissipation, and makes the drying atmosphere inside the drying channel 13 more uniform, thus improving the drying efficiency.

Further, the air inlet 21 can also be in communication with the outside to draw in fresh external air. In this way, when the air drawn from the drying channel 13 is insufficient, external air can be introduced to keep the part to be dried 200 level to the utmost extent during moving in the drying process, thus effectively improving the process field.

According to some embodiments of the present application, optionally, as shown in Fig. 3, the first surface is provided with a plurality of first air blow ports 111 and the second surface is provided with a plurality of air suction ports 122, along the extension direction of the drying channel 13; all the air suction ports 122 are in communication with the air inlet 21 of the same circulating fan 20, and all the first air blow ports 111 are in communication with the air outlet 22 of the same circulating fan 20.

Specifically, a plurality of first pipes 30 are provided. Each air suction port 122 is connected to the air inlet 21 via one corresponding first pipe 30, and each of the first pipes 30 includes a first section 31 and a second section 32 connected to one end of the first section 31. The first section 31 is in communication with the air suction port 122, and one end of the second section 32 away from the first section 31 is in communication with the air inlet 21. The first sections 31 of the plurality of first pipes 30 are arranged in parallel, and the second sections 32 of the plurality of first pipes 30 are combined to form a pipe.

Similarly, a plurality of second pipes 40 are provided. Each of the first air blow ports 111 is in communication with the air outlet 22 via the corresponding second pipe 40, and each of the second pipes 40 includes a third section 41 and a fourth section 42 connected to one end of the third section 41. The third section 41 is in communication with the first air blow port 111, and one end of the fourth section 42 away from the third section 41 is in communication with the air outlet 22. The third sections 41 of the plurality of second pipes 40 are arranged in parallel, and the fourth sections 42 of the plurality of second pipes 40 are combined to form a pipe.

Since all the air suction ports 122 are in communication with the air inlet 21 of the same circulating fan 20, and all the first air blow ports 111 are in communication with the air outlet 22 of the same circulating fan 20, it is possible to simplify the overall structure. Moreover, since the same circulating fan 20 controls the air volume, it is easy to control the air volume.

In other embodiments of the present application, optionally, the first surface is provided with a plurality of first air blow ports 111 and the second surface is provided with a plurality of air suction ports 122, along the extension direction of the drying channel 13; a plurality of circulating fans 20 are provided, the air inlet 21 of each of the circulating fans 20 is in communication with one of the air suction ports 122, and the air outlet 22 of each of the circulating fans 20 is in communication with one corresponding first air blow port 111.

Specifically, a plurality of first pipes 30 are provided. Each of the air suction ports 122 is in communication with the air inlet 21 of one circulating fan 20 via the corresponding first pipe 30, and the first pipes 30 are arranged independently.

Similarly, a plurality of second pipes 40 are included. Each of the first air blow ports 111 is in communication with the air outlet 22 of the corresponding circulating fan 20 via the second pipe 40, and the second pipes 40 are arranged independently.

Since the air inlet 21 of each of the circulating fans 20 is in communication with one of the air suction ports 122, and the air outlet 22 of each of the circulating fans 20 is in communication with the corresponding first air blow port 111, the corresponding circulating fan 20 can be adjusted individually, and the air volume can be controlled individually, thus making the regulation more flexible.

According to some embodiments of the present application, optionally, the circulating fan 20 is a variable-frequency fan.

Since the variable-frequency fan is disposed in the circulating loop, the air volume can be regulated in real time according to drying situations, energy consumption for operation is minimized, and the overall benefit is maximized.

According to the present invention with continued reference to Fig. 3, the drying device 100 further includes a first air volume regulation valve 50, the first air volume regulation valve 50 is in communication with the first air blow port 111, and the first air volume regulation valve 50 is controlled to regulate the air blow volume of the first air blow port 111.

Specifically, the first air volume regulation valve 50 is arranged on the second pipe 40. More specifically, when there are a plurality of first air blow ports 111, there may also be a plurality of first air volume regulation valves 50, so that the air blow volume of each of the first air blow ports 111 can be regulated correspondingly.

Since the first air volume regulation valve 50 is provided to regulate the air blow volume of the first air blow port 111, the air volume can be flexibly regulated, and accordingly it is feasible to regulate the part to be dried 200 in different suspension states.

According to some embodiments of the present application, optionally, with continued reference to Fig. 3, the drying device 100 further includes a second air volume regulation valve 60, the second air volume regulation valve 60 is in communication with the air suction port 122, and the second air volume regulation valve 60 is controlled to regulate the air suction volume of the air suction port 122.

Specifically, the second air volume regulation valve 60 is arranged on the first pipe 30. More specifically, when there are a plurality of air suction ports 122, there may also be a plurality of second air volume regulation valves 60, so that the air suction volume of each of the air suction ports 122 can be regulated correspondingly.

Since the second air volume regulation valve 60 is provided to regulate the air suction volume of the air suction port 122, the air volume can be flexibly regulated, and accordingly it is feasible to regulate the part to be dried 200 in different suspension states.

According to some embodiments of the present application, optionally, with continued reference to Fig. 3, the drying device 100 further includes a first air volume regulation valve 50, the first air volume regulation valve 50 is in communication with the first air blow port 111, and the first air volume regulation valve 50 is controlled to regulate the air blow volume of the first air blow port 111; and the drying device 100 further includes a second air volume regulation valve 60, the second air volume regulation valve 60 is in communication with the air suction port 122, and the second air volume regulation valve 60 is controlled to regulate the air suction volume of the air suction port 122.

In this way, the air blow volume of the first air blow port 111 and the air suction volume of the air suction port 122 are regulated jointly, it is accordingly feasible to regulate the part to be dried 200 in different suspension states.

According to some embodiments of the present application, optionally, with continued reference to Figs. 1 and 2, the second surface 12 is further provided with a second air blow port 123, and the second air blow port 123 is spaced apart from the air suction port 122. Specially, the second air blow port 123 is staggered from the first air blow port 111.

The second air blow port 123 can blow air into the drying channel 13 to dry one side surface of the part to be dried 200. Thus, the second air blow port 123 may cooperate with the first air blow port 111 to dry both side surfaces of the part to be dried 200.

Of course, in other embodiments, optionally, with continued reference to Figs. 1 and 2, the first surface 11 is further provided with a third air blow port 112, and the third air blow port 112 is spaced apart from or is in continuous row with the first air blow port 111. Specifically, the second air blow port 123 is staggered from the third air blow port 112.

The third air blow port 112 can blow air into the drying channel 13, so that one side surface of the part to be dried 200 can be dried on the one hand, and the part to be dried 200 can be lifted, on the other hand.

In an embodiment of the present application, the third air blow port 112 and the first air blow port 111 are independent of each other, but in other embodiments, the third air blow port 112 and the first air blow port 111 may also be combined into the same air blow port, and there is no limitation herein.

It should also be noted that the second air blow port 123 and the third air blow port 112 are also similarly disposed on the air nozzles, which is not described in detail herein.

According to some embodiments of the present application, optionally, as shown in Fig. 4, the drying device 100 further includes a protecting roll 70. The protecting roll 70 is disposed within the drying channel 13. The protecting roll 70 is disposed closer to the first surface 11 than the second surface 12, and the highest point of the protecting roll 70 is higher than the first surface 11. Specifically, the highest point of the protecting roll 70 is higher than the first air nozzle 15.

When the part to be dried 200 sags due to poor suspension force in the drying channel 13, it may scratch the air nozzles or be broken. With the protecting roll 70, the sagging part to be dried 200 can be lifted, thus avoiding scratches to the air nozzles and breaking of the part.

Preferably, a plurality of protecting rolls 70 are provided, and the plurality of protecting rolls 70 are spaced apart along the extension direction of the drying channel 13.

According to some embodiments of the present application, optionally, with continued reference to Fig. 4, the drying device 100 further include a first height adjuster, and the first height adjuster is connected to the first air nozzle 15 and used to adjust the height of the first air nozzle 15 in the drying channel 13.

The height of the first air nozzle tip 151 is thereby adjusted by adjusting the height of the first air nozzle 15, so the height of the first air nozzle 15 can be flexibly adjusted according to the actual drying effect.

Similarly, the drying device 100 further includes a second height adjuster optionally, and the second height adjuster is connected to the second air nozzle 16 and used to adjust the height of the second air nozzle 16 in the drying channel 13.

Similarly, the drying device 100 further includes a third height adjuster optionally, and the third height adjuster is connected to the third air nozzle 17 and used to adjust the height of the third air nozzle 17 in the drying channel 13.

The height of the third air nozzle tip 171 is thereby adjusted by adjusting the height of the third air nozzle 17, so the height of the third air nozzle 17 can be flexibly adjusted according to the actual drying effect.

According to some embodiments of the present invention, the drying device 100 is used for drying the part to be dried 200. The drying device 100 includes a drying oven 10. The drying oven 10 has a first surface 11 and a second surface 12, and the first surface 11 and the second surface 12 are arranged opposite to and spaced apart from each other to form a drying channel 13 allowing the part to be dried 200 to pass through. The first surface 11 is provided with a first air blow port 111, and the first surface 11 and/or the second surface 12 is provided with an air exhaust port 121. The second surface 12 is further provided with an air suction port 122. The first air blow port 111 and the air suction port 122 are used to apply force to the part to be dried 200 to suspend the part to be dried 200 within the drying channel 13. The drying oven 10 further includes a second air nozzle 16 disposed on the first surface 11 and/or the second surface 12, the second air nozzle 16 has a second air nozzle tip 161, the second air nozzle tip 161 is in communication with the air exhaust port 121, and the plane where the second air nozzle tip 161 is located is inclined relative to an extension direction of the drying channel 13. The drying oven 10 further includes a third air nozzle 17 disposed on the second surface 12, the third air nozzle 17 has a third air nozzle tip 171, the third air nozzle 171 is in communication with the air suction port 122, and the plane where the third air nozzle tip 171 is located is parallel to the extension direction of the drying channel 13. The air suction port 122 is arranged directly opposite the first air blow port 111. The first surface is provided with a plurality of first air blow ports 111 that are spaced apart and the second surface is provided with a plurality of air suction ports 122 that are spaced apart, along the extension direction of the drying channel 13. Each of the first air blow ports 111 is arranged directly opposite one corresponding air suction port 122. The drying device 100 further includes a circulating fan 20. The circulating fan 20 includes an air inlet 21 and an air outlet 22. All the air suction ports 122 are in communication with the air inlet 21 of the same circulating fan 20, and all the first air blow ports 111 are in communication with the air outlet 22 of the same circulating fan 20. The circulating fan 20 is a variable-frequency fan. The drying device 100 further includes a plurality of first air volume regulation valves 50, each of the first air volume regulation valves 50 is in communication with one corresponding air blow port 111, and the first air volume regulation valve 50 is controlled to regulate the air blow volume of the air blow port 111. The drying device 100 further includes a plurality of second air volume regulation valves 60, each of the second air volume regulation valves 60 is in communication with one corresponding air suction port 122, and the second air volume regulation valve 60 is controlled to regulate the air suction volume of the air suction port 122.

Finally, it should be noted that the above Examples are merely used for illustrating rather than limiting the technical solutions of the present application. Although the present application has been described in detail with reference to the above various Examples, those of ordinary skill in the art should understand that the technical solutions specified in the above various Examples may still be modified, or some or all of the technical features therein may be equivalently substituted; and such modifications or substitutions do not make the essence of the corresponding technical solutions depart from the scope of the technical solutions of the various Examples of the present application, which shall fall within the scope of the claims and the specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A drying device (100), used for drying a part to be dried (200), the drying device (100) comprising:
a drying oven (10) having a first surface (11) and a second surface (12), the first surface (11) and the second surface (12) being arranged opposite to and spaced apart from each other to form a drying channel (13) allowing the part to be dried (200) to pass through, the first surface (11) being provided with a first air blow port (111), and the first surface (11) and/or the second surface (12) being provided with an air exhaust port (121);
wherein the second surface (12) is further provided with an air suction port (122);
the drying device is **characterized in that**
the drying device (100) further comprises a first air volume regulation valve (50), the first air volume regulation valve (50) is in communication with the first air blow port (111), and the first air volume regulation valve (50) is controlled to regulate the air blow volume of the first air blow port (111); and
the drying device (100) further comprises a second air volume regulation valve (60), the second air volume regulation valve (60) is in communication with the air suction port (122), and the second air volume regulation valve (60) is controlled to regulate the air suction volume of the air suction port (122).

2. The drying device (100) according to claim 1, wherein the first air blow port (111) and the air suction port (122) are used to apply force to the part to be dried (200) to suspend the part to be dried (200) within the drying channel (13).

3. The drying device (100) according to claim 1 or 2, wherein the drying oven (10) further comprises a second air nozzle (16) disposed on the first surface (11) and/or the second surface (12), the second air nozzle (16) has a second air nozzle tip (161) in communication with the air exhaust port (121), and the plane where the second air nozzle tip (161) is located is inclined relative to an extension direction of the drying channel (13); and/or
the drying oven (10) further comprises a third air nozzle (17) disposed on the second surface (12), the third air nozzle (17) has a third air nozzle tip (171) in communication with the air suction port (122), and the plane where the third air nozzle tip (171) is located is perpendicular to the extension direction of the drying channel (13).

4. The drying device (100) according to any one of claims 1 to 3, wherein the air suction port (122) is arranged directly opposite the first air blow port (111).

5. The drying device (100) according to claim 4, wherein along the extension direction of the drying channel (13), the first surface (11) is provided with a plurality of first air blow ports (111) that are spaced apart, and the second surface (12) is provided with a plurality of air suction ports (122) that are spaced apart.

6. The drying device (100) according to any one of claims 1 to 5, wherein the drying device (100) further comprises a circulating fan (20), the circulating fan (20) has an air inlet (21) and an air outlet (22), the air inlet (21) is in communication with the air suction port (122), and the air outlet (22) is in communication with the first air blow port (111).

7. The drying device (100) according to claim 6, wherein along the extension direction of the drying channel (13), the first surface (11) is provided with a plurality of first air blow ports (111), and the second surface (12) is provided with a plurality of air suction ports (122);
all the air suction ports (122) are in communication with the air inlet (21) of the same circulating fan (20), and all the first air blow ports (111) are in communication with the air outlet (22) of the same circulating fan (20); or
a plurality of circulating fans (20) are provided, the air inlet (21) of each of the circulating fans (20) is in communication with one of the air suction ports (122), and the air outlet (22) of each of the circulating fans (20) is in communication with one corresponding first air blow port (111).

8. The drying device (100) according to claim 6, wherein the circulating fan (20) is a variable-frequency fan.

9. The drying device (100) according to any one of claims 1 to 8, wherein the second surface (12) is further provided with a second air blow port (123), and the second air blow port (123) is spaced apart from the air suction port (122).

## Patentansprüche

1. Trocknungsvorrichtung (100) zum Trocknen eines zu trocknenden Teils (200), wobei die Trocknungsvorrichtung (100) Folgendes umfasst:
einen Trockenofen (10) mit einer ersten Fläche (11) und einer zweiten Fläche (12), wobei die erste Fläche (11) und die zweite Fläche (12) einander entgegengesetzt und voneinander beabstandet angeordnet sind, um einen Trocknungskanal (13) zu bilden, der es dem zu trocknenden Teil (200) ermöglicht, dort hindurch zu verlaufen, wobei die erste Fläche (11) mit einem ersten Luftblasanschluss (111) versehen ist und die erste Fläche (11) und/oder die zweite Fläche (12) mit einem Luftauslassanschluss (121) versehen ist;
wobei die zweite Fläche (12) ferner mit einem Luftansauganschluss (122) versehen ist;
wobei die Trocknungsvorrichtung **dadurch gekennzeichnet ist, dass**
die Trocknungsvorrichtung (100) ferner ein erstes Luftmengenregelventil (50) umfasst, wobei das erste Luftmengenregelventil (50) mit dem ersten Luftblasanschluss (111) in Verbindung steht und das erste Luftmengenregelventil (50) gesteuert wird, um das Luftblasvolumen des ersten Luftblasanschlusses (111) zu regeln; und
die Trocknungsvorrichtung (100) ferner ein zweites Luftmengenregelventil (60) umfasst, wobei das zweite Luftmengenregelventil (60) mit dem Luftansauganschluss (122) in Verbindung steht und das zweite Luftmengenregelventil (60) gesteuert wird, um das Luftblasvolumen des Luftansauganschlusses (122) zu regeln.

2. Trocknungsvorrichtung (100) nach Anspruch 1, wobei der erste Luftblasanschluss (111) und der Luftansauganschluss (122) verwendet werden, um eine Kraft auf das zu trocknende Teil (200) aufzubringen, um das zu trocknende Teil (200) innerhalb des Trocknungskanals (13) aufzuhängen.

3. Trocknungsvorrichtung (100) nach Anspruch 1 oder 2, wobei der Trockenofen (10) ferner eine zweite Luftdüse (16) umfasst, die auf der ersten Fläche (11) und/oder der zweiten Fläche (12) angeordnet ist, wobei die zweite Luftdüse (16) eine zweite Luftdüsenspitze (161) in Verbindung mit dem Luftauslassanschluss (121) aufweist und die Ebene, in der sich die zweite Luftdüsenspitze (161) befindet, relativ zu einer Ausdehnungsrichtung des Trocknungskanals (13) geneigt ist; und/oder
der Trockenofen (10) ferner eine dritte Luftdüse (17) aufweist, die auf der zweiten Fläche (12) angeordnet ist, wobei die dritte Luftdüse (17) eine dritte Luftdüsenspitze (171) in Verbindung mit dem Luftansauganschluss (122) aufweist und die Ebene, auf der sich die dritte Luftdüsenspitze (171) befindet, senkrecht zur Ausdehnungsrichtung des Trocknungskanals (13) ist.

4. Trocknungsvorrichtung (100) nach einem der Ansprüche 1 bis 3, wobei der Luftansauganschluss (122) dem ersten Luftblasanschluss (111) direkt entgegengesetzt angeordnet ist.

5. Trocknungsvorrichtung (100) nach Anspruch 4, wobei die erste Fläche (11) entlang der Ausdehnungsrichtung des Trocknungskanals (13) mit mehreren ersten Luftblasanschlüssen (111) versehen ist, die voneinander beabstandet sind, und die zweite Fläche (12) mit mehreren Luftansauganschlüssen (122) versehen ist, die voneinander beabstandet sind.

6. Trocknungsvorrichtung (100) nach einem der Ansprüche 1 bis 5, wobei die Trocknungsvorrichtung (100) ferner einen Umwälzlüfter (20) umfasst, wobei der Umwälzlüfter (20) einen Lufteinlass (21) und einen Luftauslass (22) aufweist, wobei der Lufteinlass (21) mit dem Luftansauganschluss (122) in Verbindung steht und der Luftauslass (22) mit dem ersten Luftblasanschluss (111) in Verbindung steht.

7. Trocknungsvorrichtung (100) nach Anspruch 6, wobei die erste Fläche (11) entlang der Ausdehnungsrichtung des Trocknungskanals (13) mit mehreren ersten Luftblasanschlüssen (111) versehen ist und die zweite Fläche (12) mit mehreren Luftansauganschlüssen (122) versehen ist; wobei alle Luftansauganschlüsse (122) mit dem Lufteinlass (21) desselben Umwälzlüfters (20) in Verbindung stehen und alle ersten Luftblasanschlüsse (111) mit dem Luftauslass (22) desselben Umwälzlüfters (20) in Verbindung stehen oder
wobei mehrere Umwälzlüfter(20) vorgesehen sind, wobei der Lufteinlass (21) jedes Umwälzlüfters (20) mit einem der Luftansauganschlüsse (122) in Verbindung steht und der Luftauslass (22) jedes Umwälzlüfters (20) mit einem entsprechenden ersten Luftblasanschluss (111) in Verbindung steht.

8. Trocknungsvorrichtung (100) nach Anspruch 6, wobei der Umwälzlüfter (20) ein Gebläse mit variabler Frequenz ist.

9. Trocknungsvorrichtung (100) nach einem der Ansprüche 1 bis 8, wobei die zweite Fläche (12) ferner mit einem zweiten Luftblasanschluss (123) versehen ist und der zweite Luftblasanschluss (123) vom Luftansauganschluss (122) beabstandet ist.

## Revendications

1. Dispositif de séchage (100), utilisé pour sécher une pièce à sécher (200), le dispositif de séchage (100) comprenant :
un four de séchage (10) présentant une première surface (11) et une seconde surface (12), la première surface (11) et la seconde surface (12) étant disposées à l'opposé et espacées l'une de l'autre pour former un canal de séchage (13) permettant le passage de la pièce à sécher (200), la première surface (11) étant pourvue d'un premier orifice de soufflage d'air (111), et la première surface (11) et/ou la seconde surface (12) étant pourvue d'un orifice d'évacuation d'air (121) ;
dans lequel la seconde surface (12) est en outre pourvue d'un orifice d'aspiration d'air (122) ;
le dispositif de séchage est **caractérisé en ce que**
le dispositif de séchage (100) comprend en outre une première soupape de régulation de volume d'air (50), la première soupape de régulation de volume d'air (50) étant en communication avec le premier orifice de soufflage d'air (111), et la première soupape de régulation de volume d'air (50) est commandée pour réguler le volume de soufflage d'air du premier orifice de soufflage d'air (111) ;
le dispositif de séchage (100) comprend en outre une seconde soupape de régulation de volume d'air (60), la seconde soupape de régulation de volume d'air (60) étant en communication avec l'orifice d'aspiration d'air (122), et la seconde soupape de régulation de volume d'air (60) est commandée pour réguler le volume d'aspiration d'air de l'orifice d'aspiration d'air (122).

2. Dispositif de séchage (100) selon la revendication 1, dans lequel le premier orifice de soufflage d'air (111) et l'orifice d'aspiration d'air (122) sont utilisés pour appliquer une force à la pièce à sécher (200) afin de suspendre la pièce à sécher (200) à l'intérieur du canal de séchage (13).

3. Dispositif de séchage (100) selon la revendication 1 ou 2, dans lequel le four de séchage (10) comprend en outre une deuxième buse d'air (16) disposée sur la première surface (11) et/ou la seconde surface (12), la deuxième buse d'air (16) a une deuxième pointe de buse d'air (161) en communication avec l'orifice d'évacuation d'air (121), et le plan dans lequel se trouve la deuxième pointe de buse d'air (161) est incliné par rapport à une direction d'extension du canal de séchage (13) ; et/ou
le four de séchage (10) comprend en outre une troisième buse d'air (17) disposée sur la seconde surface (12), la troisième buse d'air (17) ayant une troisième pointe de buse d'air (171) en communication avec l'orifice d'aspiration d'air (122), et le plan dans lequel se trouve la troisième pointe de buse d'air (171) est perpendiculaire à la direction d'extension du canal de séchage (13).

4. Dispositif de séchage (100) selon l'une quelconque des revendications 1 à 3, dans lequel l'orifice d'aspiration d'air (122) est disposé directement à l'opposé du premier orifice de soufflage d'air (111).

5. Dispositif de séchage (100) selon la revendication 4, dans lequel dans la direction d'extension du canal de séchage (13), la première surface (11) est pourvue d'une pluralité de premiers orifices de soufflage d'air (111) qui sont espacés les uns des autres, et la seconde surface (12) est pourvue d'une pluralité d'orifices d'aspiration d'air (122) qui sont espacés les uns des autres.

6. Dispositif de séchage (100) selon l'une quelconque des revendications 1 à 5, dans lequel le dispositif de séchage (100) comprend en outre un ventilateur de circulation (20), le ventilateur de circulation (20) a une entrée d'air (21) et une sortie d'air (22), l'entrée d'air (21) est en communication avec l'orifice d'aspiration d'air (122), et la sortie d'air (22) est en communication avec le premier orifice de soufflage d'air (111).

7. Dispositif de séchage (100) selon la revendication 6, dans lequel dans la direction d'extension du canal de séchage (13), la première surface (11) est pourvue d'une pluralité de premiers orifices de soufflage d'air (111), et la seconde surface (12) est pourvue d'une pluralité d'orifices d'aspiration d'air (122) ;
tous les orifices d'aspiration d'air (122) sont en communication avec l'entrée d'air (21) du même ventilateur de circulation (20), et tous les premiers orifices de soufflage d'air (111) sont en communication avec la sortie d'air (22) du même ventilateur de circulation (20) ; ou
une pluralité de ventilateurs de circulation (20) sont prévus, l'entrée d'air (21) de chacun des ventilateurs de circulation (20) est en communication avec l'un des orifices d'aspiration d'air (122), et la sortie d'air (22) de chacun des ventilateurs de circulation (20) est en communication avec un premier orifice de soufflage d'air correspondant (111).

8. Dispositif de séchage (100) selon la revendication 6, dans lequel le ventilateur de circulation (20) est un ventilateur à fréquence variable.

9. Dispositif de séchage (100) selon l'une quelconque des revendications 1 à 8, dans lequel la seconde surface (12) est en outre pourvue d'un second orifice de soufflage d'air (123), et le second orifice de soufflage d'air (123) est espacé de l'orifice d'aspiration d'air (122).
